# EUROPEAN PATENT APPLICATION

(11) **EP 3 385 892 A1**
(43) Date of publication of application: **10.10.2018**
(21) Application number: 17165534.3
(22) Date of filing: 07.04.2017
(51) Int. Cl.: G06Q 10/06, G06Q 30/02, G06Q 30/06, G06Q 50/16

(54) **SHARED USE REAL ESTATE MARKETING PREMISES**

(71) Applicant: Virtual Trade Center Oy, 33100 Tampere (FI)
(72) Inventor: MIIKKULAINEN, Atte, 33100 Tampere (FI); LINDQVIST, Tony, 33100 Tampere (FI); GRÖNBERG, Juhani, 33100 Tampere (FI)
(74) Representative: Seppo Laine Oy

(57) **Abstract**

According to an example aspect of the present invention, there is provided shared use real estate marketing premises (100) for marketing real estate, such as apartments and offices, by a plurality of service entities, comprising: a virtual reality system (102) capable of generating a virtual reality view of virtual reality models of real estate assigned to the plurality of service entities; and means (104) for controlling the virtual reality system to generate a virtual reality view of at least one virtual reality model of real estate assigned to a service entity, when the virtual a reality system is scheduled to the service entity at a given time.

## Description

### FIELD

The present invention relates to real estate marketing premises and more particularly to shared use of real estate marketing premises.

### BACKGROUND

Marketing real estate such as buildings, apartments, offices and other similar property typically comprises preparing brochures of the real estate. The brochures are distributed to interested parties using web pages or on paper. Presentations are typically necessary on-site such that the real estate can be inspected by potential buyers. A significant amount of real estate agent's time is consumed in arranging viewings of the real estate assigned to him/her. Similarly, a person interested to buy real estate has to contact real estate agents of the real estate for arranging on-site viewing of the real estate.

Property developers typically have own sales offices for marketing real estate before and during construction. Typical marketing material includes illustrations and construction drawings of the real estate. Usage efficiency of the sales office in terms of number of presentations to potential buyers depends on the capability of the marketed real estate to interest potential buyers and the number of potential buyers the sales office is capable of serving in a time period. The number and type of real estate marketed by a single property developer is limited, whereby the interest to potential buyers towards the real estate is also limited. For example, an apartment house with various sizes of apartments has a larger audience of interested buyers than if the only apartment left to be marketed is a pent house apartment. Therefore it is very challenging to maintain a high usage efficiency of the sales office at least when the number of real estate is low and the type of real estate does not have a large audience of potential buyers. Moreover, the nature of the marketing material is static and scattered to multiple documents. Accordingly, the material is time consuming to study and it does not support serving high numbers of potential buyers. Moreover, the marketing material has very low immersive effect for the potential buyer and it is possible that by human error not all the facts about the real estate can be discovered. Consequently, it is both time consuming and complex for the potential buyer to establish a true-to-life understanding of the real estate under construction.

### SUMMARY OF THE INVENTION

The invention is defined by the features of the independent claims. Some specific embodiments are defined in the dependent claims.

According to a first aspect of the present invention, there is provided a shared use real estate marketing premises for marketing real estate, such as apartments and offices, by a plurality of service entities, comprising:
a virtual reality system capable of generating a virtual reality view of virtual reality models of real estate assigned to the plurality of service entities; and
means for controlling the virtual reality system to generate a virtual reality view of at least one virtual reality model of real estate assigned to a service entity, when the virtual a reality system is scheduled to the service entity at a given time.
According to a second aspect of the present invention, there is provided an office, structure or a building comprising shared use real estate marketing premises according to an aspect, wherein at least part of the floor space is scheduled for shared use of the virtual reality system (102) for the service entities.

### BRIEF DESCRIPTION OF THE DRAWINGS

FIG. 1 illustrates real estate marketing premises in accordance with at least some embodiments of the present invention;
FIG. 2 illustrates a system architecture for real estate marketing premises in accordance with at least some embodiments of the present invention;
FIG. 3 illustrates a sequence for real estate marketing premises in accordance with at least some embodiments of the present invention;
FIG. 4 illustrates a flow chart for scheduling real estate marketing premises in accordance with at least some embodiments of the present invention; and
FIG. 5a, 5b and 5c illustrate views in a customer service terminal for real estate marketing premises in accordance with at least some embodiments of the present invention.

### EMBODIMENTS

In connection with premises for marketing real estate such as apartments and offices, the premises are shared between a plurality of service entities. The premises comprise a virtual reality system capable of generating a virtual reality view of virtual reality models of real estate assigned to the plurality of service entities. The premises have means for controlling the virtual reality system to generate a virtual reality view of at least one virtual reality model of real estate assigned to a service entity, when the virtual a reality system is scheduled to the service entity at a given time. In this way the shared use of the premises is facilitated, while potential buyers are provided a true-to-life experience of the real estate.

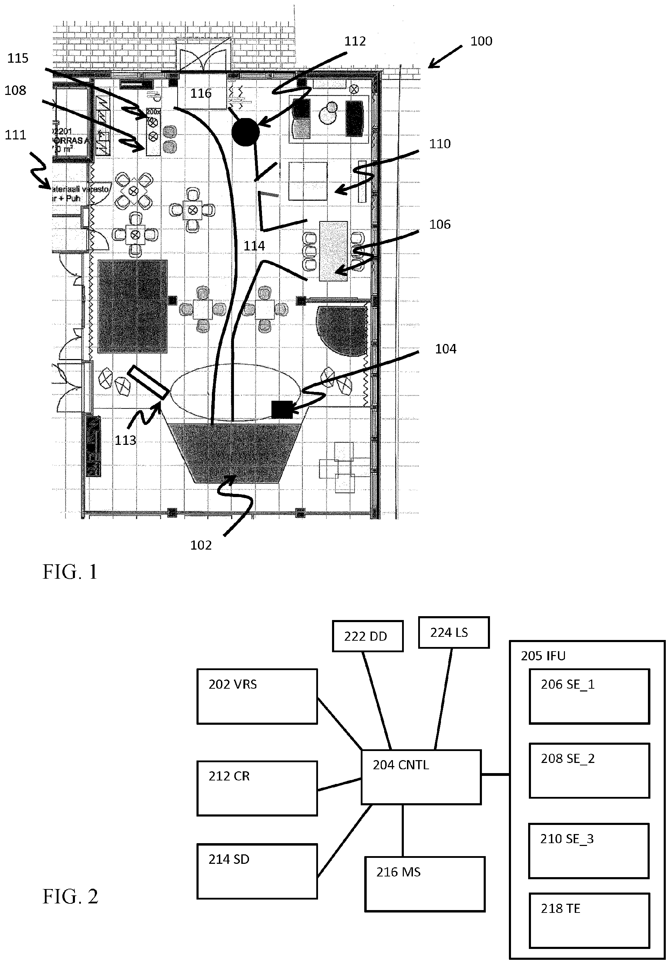

FIG. 1 illustrates Real Estate Marketing Premises (REMP) 100 in accordance with at least some embodiments of the present invention. The REMP comprises one or more entities 102, 106, 108, 110, 111 and means for controlling the entities. The REMP entities comprise preferably floor space capable of being shared between the SEs. The REMP entities may comprise a Virtual Reality System (VRS) 102 capable of generating a virtual reality view of virtual reality models of real estate assigned to a plurality of Service Entities (SEs). The means 104 for controlling the entities may cause the VRS to generate a virtual reality view of at least one virtual reality model of real estate assigned to a service entity, when the VRS is scheduled to the service entity at a given time. In this way the SEs may utilize the VRS at scheduled times such that the REMP may be shared and used for viewing real estate of more than one SE. Thanks to the VRS, the viewing allows a true-to-life experience to the person viewing the real estate. The VRS virtual reality model may be viewed in a recorded tour of the virtual reality model in the virtual reality view, whereby the time to view the real estate may be accurately controlled.

Preferably the VRS is capable of generating a virtual reality view viewable to a plurality of persons at the same time such that the persons are shown the same virtual reality view. In this way the persons REMP may provide a true-to-life understanding of the real estate to a group of people. Since the virtual reality view is the one and the same view to all the people, the understanding of the real estate obtained to each of the people in the group is like they were present in the actual real estate with the group. This provides advantages particularly in marketing of real estate still under construction.

It should be appreciated that it may be preferred that the virtual reality view generated by the VRS may be scaled to actual size of the real estate, particularly, when the virtual reality view presents an indoor of an apartment.

In an embodiment, the VRS 102 comprises one or more virtual caves. A virtual cave refers to a part of the real estate, e.g. building, apartment, office, where a virtual reality view may be presented viewable to a person within the virtual reality cave on a physical structure forming a part of the real estate. The virtual reality cave comprises a wall surface and a floor surface and projecting means. The projecting means may be connected to a source of video signal. The video signal received from the source of video signal may be projected by the projecting means on the wall and floor surfaces. The projected video signal may be a stereo video signal, for example. The virtual reality view may be viewed by a person, when the person is observing the projections on the wall and floor surfaces. The virtual cave may have a viewing location. The viewing location is a location on the floor space of the virtual cave, where the virtual reality view may be optimally viewed by a person. The VRS may comprise a virtual reality viewing accessory for viewing the virtual reality view. The virtual reality viewing accessory may be worn by the person for viewing the virtual reality view. Examples of the virtual reality viewing accessory comprise virtual reality glasses. Virtual reality glasses may be adapted for viewing the projected stereo video signal. For example, the virtual reality glasses may comprise different colors of lenses/films in front of the left and right eyes.

A virtual reality system may be capable of being navigated by a user. The virtual reality system may comprise means for receiving user input for moving a viewing position within the virtual reality model. The viewing position may be preferably moved in three dimensions. Additionally a viewing direction provided in the viewing position may be moved, for example tilted and/or rotated.

In an embodiment, the virtual reality models may be stored associated to a responsible service entity. The REMP 100 may comprise a library of virtual reality models. The library may be operatively connected to the VRS 102 for displaying the virtual reality models of real estate assigned to the service entities. The service entities may access the virtual reality models via the VRS. Each service entity may be capable of accessing only the virtual reality models that represent real estate assigned to the service entity, i.e. the responsible service entity.

It should be appreciated that the access to the virtual reality models may be subject to authentication of the service entity. The REMP 100 may comprise means for authenticating service entities. Accordingly, the VRS may be controlled to present virtual reality models of the service entity subject to authentication of the service entity using the means for authenticating service entities. The means for authenticating may comprise an input element of the user interface capable of accepting a service entity specific code. The user interface may be provided on the VRS 102 or a customer service Terminal (TE) 112 in the REMP, for example.

In an embodiment, the REMP entities may further comprise one or more of a Conference Area (CA) 106, a Service Desk (SD) 108, an interior design Materials Area (MA) 110, a Materials Storage 111, a Lighting System (LS) 115 and a Display Device (DD) 113 and a customer service Terminal (TE) 112. The conference area, the service desk and the interior design materials area may be arranged in separate rooms or in an open space. In the open space the conference area, the service desk and the interior design materials area may be separated by open space and/or a passage 114. The passage may comprise open space in the REMP and/or a structurally limited space capable of allowing movement of people between one part of the REMP and another part of the REMP. Alternatively or additionally, the passage may be capable of allowing movement of people between one part of the REMP and an entrance and/or exit 116.

In an example the display device may be controllable to display service entity specific content according to a display device profile of the service entity. The service entity specific content may comprise content, for example still images, video and/or audio that is adapted to the specific service entity. The display device may be caused to display content according to the display device profile, when another REMP entity, for example the VRS, is scheduled to the service entity. On the other hand the display device may be scheduled independently from other REMP entities. Examples of the display devices comprise LCD-displays.

In an example the lighting system may be controllable to emit light according to a lighting profile of the service entity. The lighting profile may define at least at least one of an intensity of light and light color. In this way the REMP or one or more other REMP entities may be adapted to the specific service entity. The lighting system may be caused to emit light according to the lighting profile together, when another REMP entity, for example the VRS, is scheduled to the service entity. On the other hand the lighting system may be scheduled independently from other REMP entities. Examples of the lighting systems comprise Light Emitting Diode (LED) systems.

In an example the MA 110 comprises interior design material for viewing by potential buyers. The interior design material may comprise tile, work surface material, floor material, fixture material samples of the marketed real estate. The material may be provided in various colors and types. In this way potential buyers may obtain an understanding of the options for the actual material to be used in the real estate.

The MA 110 is preferably scheduled to one or more service entities to be used in connection with the use of the VRS in the REMP. In one example the MA may be scheduled for continuous shared use for the SEs, whereby the MA may be visited by the potential buyers before and after the real estate viewing using the VRS. In another example the MA may be scheduled for private use of the SE at the same time with the VRS such that the potential buyers may utilize both the MA and the VRS at the same time for obtaining an improved a true-to-life understanding of the real estate.

The materials storage 111 may be used to store materials of SEs, when the MS is not scheduled to the SEs. Accordingly, in this way materials of the SE, who the MA is scheduled to, may be moved from the MS to the MA viewable to potential buyers.

In an example the CA 106 comprises a table and chairs for negotiations and signing of contracts regarding the real estate. Alternatively or additionally, the CA may have typical marketing material, for example illustrations and construction drawings of the real estate, available for studying.

In an example the SD 108 comprises a workspace for customer service personnel. The SD may preferably be located near the entrance and/or exit 116 of the REMP such that the customer service personnel may be easily contacted by people visiting the REMP.

In an embodiment, the REMP 100 comprises a customer service terminal (TE) 112. The TE may provide for automated customer service alternatively or additionally to personal customer service.

The TE and/or the VRS may have a user interface capable of receiving user input and displaying information to the user. Examples of the TE and VRS comprise: a computer; a smart phone and a tablet computer. The user interface on the TE and VRS may be provided by a touch screen capable of both displaying information to the user and receiving input form the user. On the other hand the user interface on the TE and VRS may be provided by a separate display device and a user input device such as a keyboard and a mouse.

In an embodiment, the TE 112 is arranged at an exit and/or entrance 116 of the REMP. In this way the TE is easily accessible for people visiting the REMP. The TE may be arranged on a pole, whereby the TE is elevated above the floor to allow use of the TE when people are standing, while taking only small floor space provided by the small floor space required by the pole. A suitable height for the TE may be between 0.7 m and 1 m.

In an embodiment, the REMP 100 comprises a passage 114 connecting the VRS 102 to the TE. In this way people may move from the VRS after viewing the virtual reality view to the TE, where their contact information may be collected by the TE and sent to service entities. TE 112 may be adapted to receive user input comprising one or more of: a selection of a service entity of first type, a selection of a service entity of a second type and contact information. The user input may be received via a user interface provided in the TE.

In an embodiment, the TE 112 is adapted to categorize information selectable by user input into views comprising a contact information input form and at least one of: selectable service entities of first type and selectable service entities of second type; and on receiving user input to the contact information input form and at least one further view, the TE is adapted to send the contact information of the user to one or more service entities selected by the user. In this way the user may select which service entities in each category he/she is interested and the contact information is sent only to the selected service entities.

In an example, the contact information may be sent by data communications means. The data communications means may comprise a wired or wireless data connection. The TE may comprise an external or an internal module for the wireless or wired data connection.

Examples of the types of service entities comprise banks, real estate agents, removal firms, renovation companies, construction companies and cleaning companies. The contact information may comprise information for contacting the customer, for example name, address, phone number and email address.

In an embodiment, an office, structure or a building comprises the REMP 100. The REMP may be arranged on a floor space of the office, the structure or the building. At least part of the floor space is scheduled for shared use of the VRS 102 for the service entities.

FIG. 2 illustrates system architecture for real estate marketing premises in accordance with at least some embodiments of the present invention. The system architecture illustrates entities and connections between the entities for implementing a REMP, for example the REMP 100 in FIG. 1. Referring to FIG. 2 the system architecture comprises at least a VRS 202 for shared use between SEs (SE_1, SE_2 and SE_3) 206, 208, 210 and means for controlling (CNTL) 204 the VRS. The CNTL may be connected to a plurality of SEs and/ or a TE via an Interface Unit (IFU) 205. The IFU provides communications of information between the SEs, TE and the CNTL such that the shared use of the VRS is facilitated.

It should be appreciated that the REMP may comprise further entities in addition to the VRS that may be shared by the SEs. The further entities may comprise one or more CAs 212, SDs 214, MAs 216, DDs 222, LSs 224 and TEs 218.

The means for controlling may be capable of obtaining/storing profile information of the SEs. The profile information may comprise types of marketing events and their mapping to REMP entities, a display device profile and /or a lighting profile. In this way the SEs may be scheduled REMP entities based on predefined information comprising for example duration and/or REMP entities according to each marketing event.

All the entities of the system architecture may be located within the REMP. On the other hand connections between the entities provide that some of the entities may be located physically outside of the REMP, while still belonging to the REMP according to a functional aspect of the REMP. A REMP entity, VRS, CA, SD, MA, DD, LS and/or TE, comprising floor space for sharing between the SEs, may be implemented one or more physical structures that have one or more functional elements. Examples of the physical structures comprise a room, a structure within a room or area of the floor space of the REMP. Examples of the functional elements comprise a computer or a computer program. In one example a computer program implementing a functional entity may comprise an electronic calendar capable of maintaining and updating scheduling information of the REMP entity such that SEs may be scheduled to use the REMP entity.

Connections between the entities in the architecture may comprise wired or wireless data connections. The wireless data connection may be a mobile communications network connection or an IEEE 802.11 wireless local area network (WLAN) connection. The wired data connection may be provided by an Ethernet connection, a databus or a physical memory.

Examples of information communicated between the IFU 205 and the CNTL 204, comprise: scheduling requests, scheduling grants and feedback. A scheduling request may be a message from the IFU to the CTNL. The scheduling request may comprise information indicating a request to reserve a specific part of the REMP to a specific SE at a given time. A scheduling grant may be an answer message from the CNTL to the IFU and triggered by a scheduling request. The scheduling grant may comprise information indicating whether the scheduling request is granted as requested, granted as amended or rejected. A feedback may be a feedback message comprising information indicating a need for more time to use the REMP entities and/or need for more entities to be scheduled at the same time.

The IFU 205 may be capable of generating scheduling requests and feedback, and receiving scheduling grant messages. The IFU may comprise a user interface, via which the SEs and/or TE may be capable of causing the scheduling requests and feedback. The scheduling grants may be used to generate a view of reserved REMP resources to be displayed to the SEs via the IFU. In one example, user interface of the IFU may be a web-based user interface. The web-based user interface may be accessed and viewed by the SE via a web browser, for example. In one example, the web-based user interface may be displayed on the TE.

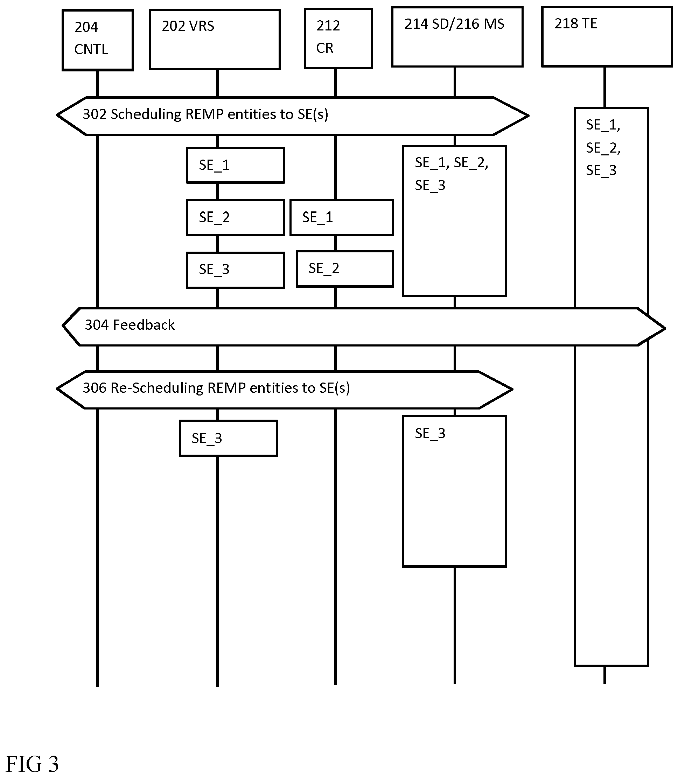

FIG. 3 illustrates a sequence for real estate marketing premises in accordance with at least some embodiments of the present invention. The sequence describes scheduling of the REMP entities VRS, CA, SD, MA, TE to SEs with reference to FIG. 2. In the sequence time progresses downwards and illustrates order of events. SEs (SE_1, SE_2, SE_3) scheduled to use a REMP entity are defined on a time line extending downwards from the REMP entity. It should be appreciated that the scheduling according to FIG. 3 may be applied alternatively or additionally to other REMP entities such as one or more lighting systems and/or display devices within the REMP.

In phase 302 the CNTL may schedule one or more entities of the REMP to SEs. The scheduling may be performed on the basis of scheduling requests received from the SEs. Scheduling grants are sent to the SEs in response to the scheduling requests for indicating results of the scheduling performed by the CNTL. The scheduling may be performed in a time-division manner, whereby an SE scheduled to use an entity during one time period may use the entity for its private use during the time period. Before and/or after an entity is scheduled to be used by one of the SEs, another SE may be scheduled to use the entity. It should be appreciated that an entity may be scheduled to use an SE for one or more time periods that may be consecutive or separate in time. On the other hand the scheduling may be performed for continuous shared use, whereby more than one or all of the service entities may use the scheduled entity.

In the sequence of FIG. 3, the scheduling phase 302 causes the VRS to be scheduled first to SE_1, second to SE_2 and third to SE_3. The same SE is not scheduled CA or other REMP entities for its private use at the same time the VRS is scheduled to the SE for private use. Accordingly, other REMP entities such as the CA are scheduled to the SE after the scheduled use of the VRS to the same SE. On the other hand, the service entities SE_1, SE_2 and SE_3 may be scheduled for continuous shared use of the TE, SD and/or MA at the same time they are separately scheduled to use the VRS. Accordingly, in phase 302 the entities SD/MA and TE are scheduled for continuous shared use to the SEs SE_1, SE_2 and SE_3. In this way the REMP entities SD/MA and TE may be accessed by the SE scheduled at the same time to use the VRs.

In phase 304, the CNTL may obtain feedback. The feedback may be obtained from the SEs or from the TE. In this way the scheduling may be provided information regarding a need for more time to use the REMP entities and/or need for more entities to be scheduled at the same time. In one example, the feedback may be obtained via a web-based user interface completed by a user.

In phase 306, the CNTL may perform scheduling on the basis of the feedback. This scheduling may be referred to re-scheduling. Following the feedback an SE may be scheduled for using privately one or more of the REMP entities privately at the same time. The feedback provides that the SE may be scheduled REMP entities according to the need of the service entity with improved accuracy. In the illustration of FIG. 3 the SE_3 is scheduled the VRS and the MA at the same time. It should be appreciated that also other configurations of REMP entities VRS, CA, SD, MA and TE are possible. When more than one REMP entity is scheduled to the SE, the SE may use the REMP without interference from other SEs. Other SEs may be scheduled more than one REMP entity for private use in a similar manner.

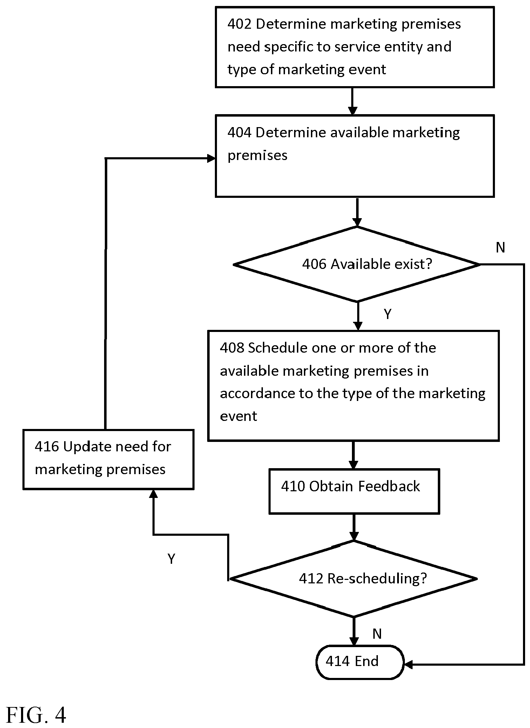

FIG. 4 illustrates a flow chart for scheduling real estate marketing premises in accordance with at least some embodiments of the present invention. The flow chart may be performed by means 204 for controlling in the system architecture of FIG. 2. The means for controlling may be an apparatus or arrangement comprising at least one processing core, at least one memory including computer program code. The at least one memory and the computer program code being configured to, with the at least one processing core, cause the apparatus at least to perform the phases of FIG. 4. The phases of FIG. 4 may be performed in a sequence illustrated in FIG. 3. For example, phases 402 to 408 may be performed as part of phase 302 in FIG. 3. Phase 410 may be performed as part of phase 304. Phases 412 and 416 may be performed as part of phase 306. The

In phase 402, a need for REMP entities specific to service entity and type of marketing event is determined. The need for REMP entities may comprise a time period a specific REMP entity is needed. Types of marketing events and their mapping to REMP entities may be predefined, for example regarding a number and/or type of REMP entities needed for a specific type of marketing event.

The need may be determined on the basis of scheduling requests from SEs, wherein the scheduling requests may comprise information indicating a type of marketing event. It should be appreciated that information indicating the type of marketing event may be obtained in separate messages or the information may be preconfigured to a profile of the service entity.

In phase 404 available REMP entities are determined. The available REMP entities may be determined in accordance with the type of the marketing event and the determined need for REMP entities.

If 406 available REMP entities exist, one or more one or more of the available REMP entities are scheduled 408 in accordance with the type of the marketing event and the need for REMP entities. The scheduling may be performed similar to described in phase 302 in FIG. 3. If 406 available marketing premises do not exist, the flow chart proceeds to end 414.

In phase 410 feedback is obtained regarding the scheduling from the SEs or from the TE.

If 412 the feedback indicates a change in the need for REMP entities and/or a change in type of marketing event, the need for REMP entities and/or the type of marketing event is updated 416 and available REMP entities are determined on the basis of the updated need and/or type in phase 404. Otherwise 412, the flow chart proceeds to end 414.

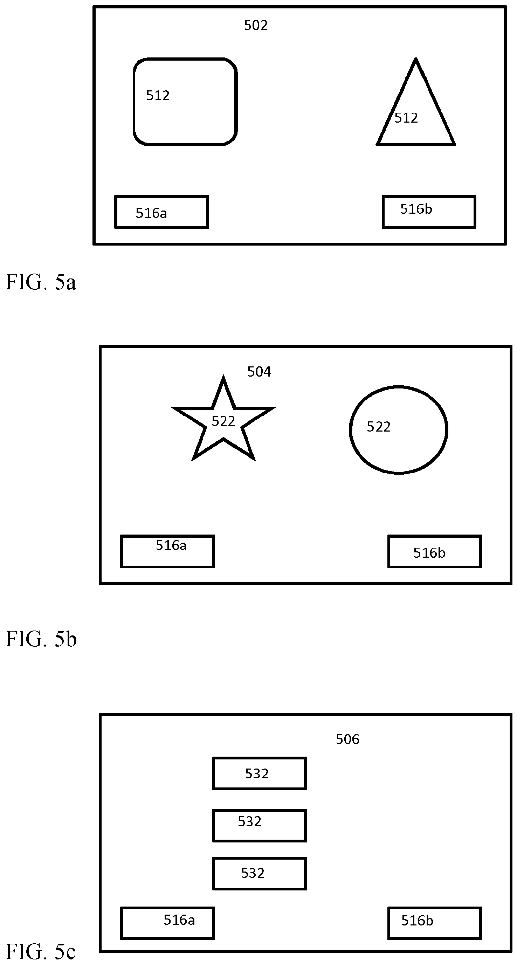

FIG. 5a, 5b and 5b illustrate views in a customer service terminal for real estate marketing premises in accordance with at least some embodiments of the present invention. The views 502, 504, 506 may comprise a contact information input form 506 and at least one of: selectable service entities 512 of first type and selectable service entities 522 of second type. The contact information input form may comprise one or more input fields 532 for receiving contact information from the user. The contact information may comprise for example name, address and telephone number. The contact information may be received by a single input field or more input field may be used. The views may comprise one or more user input elements 516a, 516b for moving between the views and/or sending the contact information input form to the selected one or more service entities. Accordingly, on receiving user input on a user input element 516a, 516b, the view may be changed to another view. The view may be traversed in an ordered sequence, whereby at least the user input element of the last view may cause sending the contact information input form to the selected one or more service entities.

An apparatus, an entity or arrangement according to an embodiment may comprise memory and processor. Memory may comprise random-access memory and/or permanent memory. Memory may comprise at least one RAM chip. Memory may comprise solid-state, magnetic, optical and/or holographic memory, for example. Memory may be at least in part accessible to processor, a computer or other means for controlling. Memory may be at least in part comprised in processor. Memory may be means for storing information. Memory may comprise computer instructions that processor is configured to execute. When computer instructions configured to cause processor to perform certain actions are stored in memory, and apparatus overall is configured to run under the direction of processor using computer instructions from memory, processor and/or its at least one processing core may be considered to be configured to perform said certain actions. Memory may be at least in part comprised in processor. Memory may be at least in part external to device but accessible to device. Processor may comprise, for example, a single-or multi-core processor wherein a single-core processor comprises one processing core and a multi-core processor comprises more than one processing core. Processor may comprise more than one processor. A processing core may comprise, for example, a Cortex-A8 processing core manufactured by ARM Holdings or a Steamroller processing core produced by Advanced Micro Devices Corporation. Processor may comprise for example Qualcomm Snapdragon and/or Intel Atom processor. Processor may comprise at least one application-specific integrated circuit, ASIC. Processor may comprise at least one field-programmable gate array, FPGA. Processor may be means for performing method steps in device. Processor may be configured, at least in part by computer instructions, to perform actions.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### ACRONYMS LIST

- CNTL: means for controlling
- DD: Display Device
- CA: Conference Area
- IFU: Interface Unit
- LED: Light Emitting Diode
- LS: Lighting System
- MA: Materials Area
- SD: Service Desk
- SE: Service Entity
- REMP: Real Estate Marketing Premises
- TE: customer service Terminal
- VRS: Virtual Reality System
- WLAN: Wireless Local Area Network

### REFERENCE SIGNS LIST

- 102-: Virtual Reality System
- 104: means for controlling
- 106: Conference Area
- 108: Service Desk
- 110: Materials Area
- 111: Materials Storage
- 112: customer service Terminal
- 113: Display Device114 passage
- 115: Lighting System
- 116: entrance and/or exit
- 202-224: System architecture entities
- 302-306: Phases of the sequence of FIG. 3
- 402-416: Phases of the flow chart of FIG. 4
- 502-506: Views in customer service terminal
- 512, 522: selectable service entities
- 532: input fields
- 516a, 516b: user input elements

## Claims

1. A shared use real estate marketing premises (100) for marketing real estate, such as apartments and offices, by a plurality of service entities, comprising:
a virtual reality system (102) capable of generating a virtual reality view of virtual reality models of real estate assigned to the plurality of service entities; and
means (104) for controlling the virtual reality system to generate a virtual reality view of at least one virtual reality model of real estate assigned to a service entity, when the virtual a reality system is scheduled to the service entity at a given time.

2. Shared use real estate marketing premises (100) according to claim 1, wherein the virtual reality system (102) comprises one or more virtual caves.

3. Shared use real estate marketing premises according to claim 2, wherein the virtual caves (102) are scheduled in a time-division manner for use to the service entities.

4. Shared use real estate marketing premises (100) according to claim 1, 2 or 3, comprising at least one of a conference area (106) scheduled for use in a time-division manner to the service entities, a service desk allocated (108) for continuous shared use for the service entities, a display device (113), a lighting system (115), and an interior design materials area (110).

5. Shared use real estate marketing premises (100) according to any of claims 1 to 4, comprising a customer service terminal (112).

6. Shared use real estate marketing premises (100) according to claim 5, comprising passage (114) connecting the virtual reality system (102) to the customer service terminal (112) adapted to receiving user input comprising one or more of: a selection of a service entity of first type, a selection of a service entity of a second type and a contact information.

7. Shared use real estate marketing premises (100) according to claim 5 or 6, wherein the customer service terminal (112) is adapted to categorize information selectable by user input into views comprising a contact information input form and at least one of: selectable service entities of first type and selectable service entities of second type; and on receiving user input to the contact information input form and at least one further view, the customer service terminal is adapted to send the contact information of the user to the selected one or more service entities.

8. Shared use real estate marketing premises (100) according to any of claims 5 to 7, wherein the customer service terminal (112) is arranged at an exit and/or entrance (116).

9. Shared use real estate marketing premises (100) according to any of claims 5 to 8, wherein the customer service terminal (112) is a tablet computer.

10. Shared use real estate marketing premises (100) according to any of claims 5 to 9, wherein customer service terminal (112) is arranged on a pole.

11. Shared use real estate marketing premises (100) according to any one of the preceding claims, wherein the virtual reality models are stored associated to a responsible service entity.

12. Shared use real estate marketing premises (100) according to any one of the preceding claims, comprising means for authenticating service entities; and the virtual reality system are controlled to present virtual reality models of the service entity subject to authentication of the service entity.

13. Shared use real estate marketing premises (100) according to claim 12, wherein the means for authenticating comprises an input element of the user interface capable of accepting a service entity specific code.

14. An office, structure or a building comprising shared use real estate marketing premises (100) according to any one of the preceding claims arranged on the floor space, and wherein at least part of the floor space is scheduled for shared use of the virtual reality system (102) for the service entities.
